# EUROPEAN PATENT APPLICATION

(11) **EP 4 257 303 A1**
(43) Date of publication of application: **11.10.2023**
(21) Application number: 23160327.5
(22) Date of filing: 07.03.2023
(51) Int. Cl.: B25J 9/16, G05B 17/02

(54) **APPARATUS AND METHOD FOR PROVIDING DEVELOPMENT ENVIRONMENT FOR FUNCTIONAL MODULES OF ROBOT**

(30) Priority: 04.04.2022 KR 20220041749
(71) Applicant: DOOSAN ROBOTICS INC, Gyeonggi-do 16648 (KR)
(72) Inventor: LEE, Jae Suk, 16648 Suwon-si (Gyeonggi-do) (KR)
(74) Representative: Cabinet Laurent & Charras

(57) **Abstract**

A provision apparatus is disclosed. The provision apparatus may include: a generation unit configured to generate a virtual world, and generate a virtual robot that matches an actual robot in the virtual world; and a provision unit configured to provide a first functional module developed for the actual robot to the virtual robot, or provide a second functional module developed for the virtual robot to the actual robot.

## Description

### CROSS-REFERENCETO RELATED APPLICATION

This application claims priority to Korean Patent Application No. 10-2022-0041749, filed on April 04, 2022 in the Korean Intellectual Property Office, the disclosure of which is incorporated by reference herein in its entirety.

### BACKGROUND

### Field

The present disclosure relates to an apparatus and method for providing an environment capable of developing functional modules related to a robot.

### Description of the Related Art

Hardware such as robots and autonomous mobile robots (AMRs) is widely used in various fields.

However, a lot of hardware is driven by limited functions, operation methods, and teaching methods provided to manufacturers. Accordingly, various hardware is applied only to limited operation environments, and is developed or managed only by skilled operators.

Accordingly, the popularization of various hardware is delayed.

Korea Patent Application Laid-Open No. 2015-0074375 discloses a technique of controlling a robot with a common user command through a unified user interface even when an operation method or a command for each type of robots is unknown by receiving a robot platform environment that provides the unified user interface to an identified robot for each type.

### SUMMARY

An object of the present disclosure is to provide a provision apparatus and method for providing a robot ecosystem environment that may develop functional modules and processes of the robot in a metaverse and include peripherals of the robot.

A provision apparatus according to the present disclosure may include: a generation unit configured to generate a virtual world, and generate a virtual robot that matches an actual robot in the virtual world; and a provision unit configured to provide a first functional module developed for the actual robot to the virtual robot, or provide a second functional module developed for the virtual robot to the actual robot.

The generation unit may generate a virtual vendor that has entered the virtual world. At this time, a simulation unit configured to simulate a virtual peripheral provided from the virtual vendor, or simulate an operation of the virtual robot equipped with a functional module may be provided.

A simulation unit configured to simulate an operation of the actual robot equipped with a functional module in the virtual world may be provided. The simulation unit may operate the virtual robot through a control of a control unit of the actual robot that matches the virtual robot.

When a customer purchases a specific actual robot, the generation unit may generate a specific virtual robot that matches the specific actual robot in the virtual world.

A simulation unit configured to simulate a process of the specific virtual robot by the customer's request may be provided. The simulation unit may communicate with a control unit of the specific actual robot when simulating the process. The simulation unit may simulate the process of the virtual robot according to control information received from the control unit.

The process may be performed by the functional module provided from a market server, or provided from the virtual vendor that has entered the virtual world.

When a process simulated by the simulation unit is requested to be mounted on the specific actual robot, the provision unit may provide the functional module used for simulation of the simulation unit to the specific actual robot as it is.

The generation unit may generate a virtual vendor that has entered a virtual world. The provision unit may provide order information of a peripheral or functional module purchased in the virtual world to an actual vendor.

A teaching unit configured to teach the virtual robot using a teaching module mounted on the virtual robot may be provided.

The teaching unit may transmit a teaching result to a control unit of the actual robot.

The teaching result of the teaching unit may be applied to the actual robot corresponding to the virtual robot through the control unit as it is.

The teaching unit may move the virtual robot with the help of the control unit in a teaching process of the virtual robot.

The generation unit can prevent a duplication of the functional module using a non-fungible token (NFT) library.

A provision apparatus according to the present disclosure includes a first communication unit configured to receive virtual control information for a virtual robot generated in a virtual world; and an analysis unit configured to calculate analysis information including at least one of a rotation angle and a rotation direction of a robot arm of an actual robot necessary for moving according to the virtual control information, wherein the first communication unit may provide the analysis information to the virtual robot.

A provision apparatus according to the present disclosure may include: a second communication unit configured to communicate with a provision server configured to generate a virtual world; and a meta unit configured to access the provision server through the second communication unit.

When a virtual robot that matches an actual robot is generated in the virtual world, the meta unit may provide a menu for purchasing a virtual peripheral of the virtual robot, or provide a menu for setting a process of the virtual robot in the virtual world.

The meta unit may provide a purchase history of the virtual peripheral to an actual peripheral vendor, or provides the process of the virtual robot to the actual robot.

A provision method according to the present disclosure may include: a generation operation of generating a virtual world, and generating a virtual robot that matches an actual robot in the virtual world; a teaching operation of teaching the virtual robot using a teaching module mounted on the virtual robot; a simulating operation of simulating an operation of the taught virtual robot, or simulating an operation of the virtual robot based on a functional module; and a providing operation of providing the teaching result or the simulated result to the actual robot.

The teaching operation may transmit the teaching result performed for the virtual robot to a control unit of the actual robot. The teaching result of the teaching unit may be applied to the actual robot through the control unit as it is.

The simulating operation may communicate with a control unit of the actual robot when simulating the operation of the virtual robot, and simulate the operation of the virtual robot according to control information received from the control unit.

The provision apparatus may be provided with a simulation unit configured to operate the virtual robot through a control unit of the actual robot.

The control unit may be provided with a first communication unit and an analysis unit.

The first communication unit may receive virtual control information for the virtual robot.

The analysis unit may calculate analysis information including at least one of a rotation angle and rotation direction of a robot arm of the actual robot necessary for moving according to the virtual control information.

The first communication unit may provide the analysis information to the simulation unit.

The simulation unit may operate the virtual robot according to the analysis information.

The provision apparatus may be provided with a teaching unit configured to teach the virtual robot using a teaching module mounted on the virtual robot.

The teaching unit may receive a confirmation of operation information of the virtual robot through a control unit of the actual robot so that a movement path of the virtual robot generated in the teaching process is the same as a movement path achievable in the actual robot.

The control unit may be provided with a first communication unit and an analysis unit.

The first communication unit may receive a virtual movement path for the virtual robot.

The analysis unit may calculate analysis information including at least one of a rotation angle and a rotation direction of a robot arm of the actual robot necessary for moving according to a virtual movement path.

The first communication unit may provide the analysis information to the teaching unit.

The teaching unit may modify the virtual movement path according to the analysis information.

The provision apparatus according to the present disclosure can provide a virtual world capable of test a robot. Customers can purchase and use a virtual robot and peripherals of the virtual robot through a virtual vendor existing in the virtual world.

The customers can receive a robot-related support through the virtual vendor, and generate teaching and functional modules using a virtual integrated development environment (IDE). The customers can operate the virtual robot according to the teaching or functional modules and teach the operation results to an actual robot again.

Operations based on the teaching and functional modules of the virtual robot performed in the virtual world can be performed through a control unit of the actual robot. In this case, the operation of the virtual robot can be consistent with the operation of the actual robot as it is. The teaching and functional module completed with the help of the control unit of the actual robot can be applied to the actual robot in the real world as it is.

### BRIEF DESCRIPTION OF THE DRAWINGS

The above and other aspects will become more apparent from the following description of the exemplary embodiments with reference to the accompanying drawings, in which:
FIG. 1 is a schematic view showing a management apparatus according to the present disclosure;
FIG. 2 is a schematic view showing a provision apparatus according to the present disclosure;
FIG. 3 is a schematic view showing an operation of the provision apparatus viewed from the viewpoint of a customer who uses the provision apparatus according to the present disclosure;
FIG. 4 is a block diagram showing a control unit of an actual robot;
FIG. 5 is a block diagram showing a management unit of the actual robot;
FIG. 6 is a flowchart showing a provision method according to the present disclosure;
FIG. 7 is a flowchart showing a provision method viewed from the viewpoint of the customer;
FIG. 8 is a flowchart showing a robot operation method according to a comparative example; and
FIG. 9 is a view showing a computing apparatus according to an embodiment of the present disclosure.

### DETAILED DESCRIPTION

Hereinafter, embodiments of the present disclosure will be described in detail with reference to the accompanying drawings so that those skilled in the art to which the present disclosure pertains may easily carry out them. However, the present disclosure may be implemented in various different forms and is not limited to the embodiments described herein. In addition, in order to clearly describe the present disclosure, parts irrelevant to the description in the drawings are omitted, and similar parts are denoted by similar reference numerals throughout the specification.

In this specification, overlapping descriptions of the same components will be omitted.

In addition, in this specification, it should be understood that when it is described that a certain component is 'connected' or 'joined' to another component, a certain component may be directly connected or joined to another component, but other components may also exist therebetween. On the other hand, in this specification, it should be understood that when it is described that a certain component is 'directly connected' or 'directly joined' to another component, other components do not exist therebetween.

In addition, the terms used herein are used only to describe specific embodiments, and are not intended to limit the present disclosure.

In addition, in this specification, the singular expression may include the plural expression unless the context clearly dictates otherwise.

In addition, in this specification, it should be understood that the term such as 'include' or 'have' is only intended to designate that the features, numbers, steps, operations, components, parts, or combinations thereof described in the specification exist, and does not preclude the presence or addition possibility of one or more other features, numbers, steps, operations, components, parts, or combinations thereof in advance.

In addition, in this specification, the term 'and/or' includes a combination of a plurality of described items or any item of the plurality of described items. In this specification, 'A or B' may include 'A', 'B', or 'both A and B'.

In addition, in this specification, detailed descriptions of well-known functions and configurations that may obscure the gist of the present disclosure will be omitted.

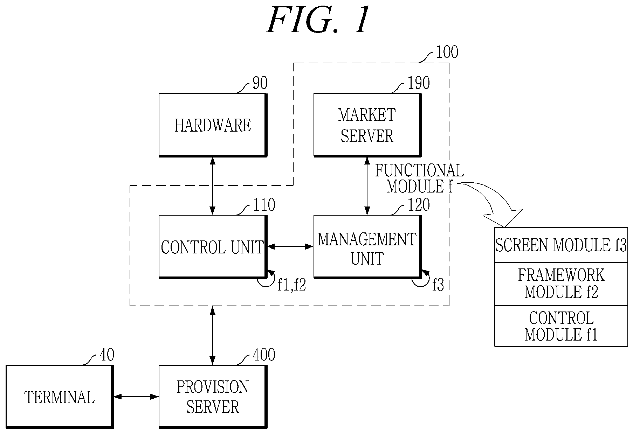

FIG. 1 is a schematic view showing a management apparatus 100 according to the present disclosure.

The management apparatus 100 shown in FIG. 1 may include a control unit 110, a management unit 120, and a market server 190.

The control unit 110 may control a hardware 90. The hardware 90 may include control information provided from the control unit 110, a robot controlled by a control signal, an autonomous mobile robot (AMR), and the like.

The control unit 110 may be a combination of software such as a control program and a processing device in which the software is executed. As an example, the control unit 110 may correspond to the processing device in which the control program for generating the control information of the robot is mounted to be executable.

Functional module f (including a control module f1, a framework module f2, and the like) for giving specific functions to the hardware 90 may be registered in the market server 190. The functional module f may determine at least one of an operation method and an operation order of the hardware 90. A 'module' described herein may mean a program itself that performs specific functions, or mean a processor, a calculator, a semiconductor chip, and the like in which the corresponding program is mounted and the specific functions are performed through the execution or operation of the corresponding program. The functional module f may include a module for giving the specific functions to hardware (unit, electronic device), such as a robot or AMR controlled by software, or include a module for providing convenient functions to a user.

Even with the same hardware 90, the hardware 90 may have various functions depending on the control unit 110 configured to control the hardware 90.

As an example, when control information for picking up or transporting an object is provided through the control unit 110, a robot corresponding to the hardware 90 may have a function of transporting the object. When information necessary for welding is provided through the control unit 110, the robot may have a function of welding the object. Of course, it may be premised that the hardware 90 end effectors such as grippers and manipulators installed in the robot are replaced with elements such as a welder in terms of the hardware 90 depending on functions.

A functional module for controlling the robot may be registered in the market server 190 so that the robot has the function of transporting the object. In addition, a functional module for controlling the robot may be registered in the market server 190 so that the robot has the function of welding the object.

At this time, the functional module f may include a program, software, and the like for controlling the robot so that the hardware 90 such as the robot performs specific functions (e.g., transporting and welding). Describing from another perspective, the functional module f may generate control information necessary for the hardware 90 to perform the specific functions.

In order to give the specific functions to the robot, it is necessary to download the functional module that causes the robot to perform the corresponding function from the market server 190, and install the downloaded functional module to the control unit 110. To this end, the management unit 120 may be used. A screen module configuring the downloaded functional module may be installed in the management unit. A framework module and a control module configuring the downloaded functional module may be installed in the control unit. Hardware may be controlled through the control module.

The management unit 120 may install the functional module in the control unit 110 or delete the functional module installed in the control unit 110. The management unit 120 may include a personal computer, a desktop computer, a smart phone, a tablet PC, a control unit dedicated to the hardware 90, and the like.

Although the management unit 120 seems to easily manage the functional module, such as installing or deleting the functional module, it should be noted that it is difficult to easily manage the functional module practically.

In general, a manufacturer of the hardware 90 may provide a basic program for controlling the hardware 90 to a customer (user). However, the corresponding basic program has a structure in which it is difficult to separate functional modules. In other words, it is clear that the basic program includes program codes for allowing functions such as the functional module f to be performed. However, it is very difficult to delete the functional module from the basic program or add a new functional module to the basic program. This is because the basic program generally provided by the manufacturer has a structure in which there is no separable functional module itself, for example, a structure in which specific functions are converged to the entire basic program.

Accordingly, when existing customers of the hardware 90 need a new function, they may be in a situation in which they should purchase the hardware 90 having the new function. Alternatively, the customer may request the addition or update of the new function from the manufacturer of the hardware 90.

Even when the manufacturer actively accepts the customer's request, there is a problem in that it takes a lot of time to update the new function. This is because it is necessary to modify or update the basic program including a robot OS, a runtime, and the like together with function-related codes as a whole in order to add the new function. When the basic program in which the robot OS, the runtime, and the function-related codes are integrated is used to control the hardware 90, there is no method to expand the corresponding function of the hardware 90 even by external other vendors. Describing from another viewpoint, an operation of adding the corresponding function to the robot having no welding function may be practically performed only by the robot manufacturer.

In addition, when the basic program is generally modified in a function update process, it may be difficult to control errors in the software due to various new bugs.

As a result, it is practically difficult to newly add the specific function different from the existing functions to the hardware 90. In addition, it is also practically difficult to delete the existing functions that require the addition of the new function.

In order to add the new functions to various hardware 90, it is necessary to first separate function-related parts and codes from the basic program. In order to achieve the corresponding object, the management apparatus 100 according to the present disclosure proposes a functional module f having a new structure.

As an example, the functional module f described in the present disclosure may include at least one of the control module f1, the framework module f2, and the screen module f3. Preferably, the functional module f includes all of the control module f1, the framework module f2, and the screen module f3. The control module f1, the framework module f2, and the screen module f3 may have the form of a program or software.

In order to implement the function of the hardware 90 performing a specific operation, the control module f1 may control the hardware 90 to perform the corresponding operation. As a result, the control module f1 may generate control information of the hardware 90 or output the control information for the hardware 90.

The screen module f3 may visually display a control operation of the hardware 90 on a display unit. The customer may recognize the operation of the hardware 90 and a state of the hardware 90 through the display unit. Alternatively, the screen module f3 may receive the customer's control value and transmit the control value to the control module.

The framework module f2 may connect the control module f1 and the screen module f3.

The framework module f2 may include a software environment that provides the design and implementation of parts corresponding to the functions of the control module f1 and the screen module f3 in a collaborative form to be reused. In other words, the control module and the screen module may perform their respective functions using the same framework module.

The control module f1 and the screen module f3 may interlock with each other through the framework module f2.

As an example, when the customer moves the robot in a virtual three-dimensional space displayed on the display unit, it may be advantageous for the actual robot to move according to the corresponding movement. At this time, the movement of the robot moving on the display unit should be converted into various control values (a change in an angle of a joint, a change in an angular velocity, and the like) required to move the actual robot. The conversion at this time may be performed by the framework module or performed by the control module. When the corresponding conversion is performed by the control module, the framework module may perform a function of converting a format of information transmitted from the screen module into a format required by the control module.

It is preferable that a reverse operation thereof is also performed normally. It may be preferable that the operation of the robot performing a setting operation be displayed in real time in the virtual three-dimensional space displayed on the display unit. To this end, the movement of the actual robot needs to be converted into coordinate values or the like in the virtual three-dimensional space, and the conversion at this time may be performed by the framework module or the control module. When the corresponding conversion is performed by the control module, the framework module may perform a function of converting the format of information transmitted from the control module into a format required by the screen module.

Practically, the framework module may include various different components that enable solution development, such as support programs, compilers, interpreter libraries, code libraries, and tool sets commonly used in the screen module and the control module. The screen module and the control module using a common component may exchange information compatible with each other. Accordingly, the framework module may be handled as converting heterogeneous information between the screen module and the control module.

The functional module f including all of the above-described control module f1, framework module f2, and screen module f3 has all elements that give specific functions to the robot other than the basic elements, such as runtime and operating system (OS) corresponding to the execution environment. The giving the specific function may mean providing the control information for achieving the specific function to the hardware 90, or mean installing and mounting the functional module f that outputs the corresponding control information in the management unit or control unit of the hardware such as a robot, an AMR, or a manipulator.

According to the present disclosure, the functional module may be in a state of being separable from the basic elements such as the control unit 110 and the OS of the management unit 120. Accordingly, when characteristic information of the hardware 90 is provided from the manufacturer of the hardware 90, not only the manufacturers of the hardware 90 but also various vendors may manufacture the functional module.

The functional module f manufactured by various vendors may be registered in the market server 190.

The customer may access the market server 190 using the display unit and an input unit of the management unit 120, and download the functional module that provides necessary functions from the market server 190.

The display unit may include various displays on which various information is visually displayed. The input unit may include a keyboard, a mouse, a touch screen, and the like for receiving customer information.

The management unit 120 may extract the screen module, the framework module, and the control module through the analysis of the functional module.

The management unit 120 may first self-install the extracted screen module f3 in the management 120. Accordingly, the management unit 120 may provide a monitoring environment for the newly downloaded functional module.

Meanwhile, the management unit 120 may transmit the extracted framework module f2 and control module f1 to the control unit 110. When the previous framework module and the previous control module already installed in the control unit 110 collide with the new framework module f2 and the new control module f1, the management unit 120 may delete the previous framework module and the previous control module from the control unit 110 or request the corresponding deletion operation from the control unit 110. In general, since the newly added function often has the one-to-one correspondence with the hardware 90 element, it is highly likely to collide with the existing function. Accordingly, it is preferable that the existing functional module is deleted when the new functional module is installed. As there may be functions not related to hardware, it should be noted once again that even the newly added function may not necessarily have the one-to-one correspondence with the hardware.

The management unit 120 or the control unit 110 may install the framework module f2 and the control module f1 transmitted to the control unit 110 by the management unit 120 in the control unit 110.

Through the above process, the operation environment of the hardware 90 having the new function and the operation environment for monitoring the corresponding hardware 90 from the viewpoint of the new function may be equipped.

Meanwhile, the management unit 120 and the control unit 110 may be integrally formed. In this case, the display unit and the input unit may also be integrally formed with the control unit 110 of the hardware 90.

According to the management apparatus 100 according to the present disclosure, when an abnormality occurs in the newly added function, the corresponding problem can be solved only by correcting errors included in the functional module. In addition, it is sufficient for each vendor to develop only the functional module without having to develop all kinds of software including OS, runtime, and the like related to the hardware 90 control. Accordingly, each vendor may devote all capabilities only to the development of the functional module, so that the quality and error rate of the functional module can be improved.

Meanwhile, when the functional module is manufactured in a state of being separable from the basic elements such as the OS, runtime, and API of the control unit 110, new functions may be added and deleted, and various vendors may participate in the manufacturing of the functional module.

However, the type and expression method of information expressed in the functional module separated from the basic element may be different from the type and expression method of information handled by the basic element. In order to solve the above problem, the control unit 110 may be additionally equipped with an analysis module 13 and a conversion module 15.

For example, the analysis module 13 may receive control information to move the end effector of the articulated robot by 10 cm in a y-axis direction from the control module.

The analysis module 13 may calculate a rotation angle, a rotation direction, and the like of a robot arm necessary for the end effector to move by 10 cm in the y-axis direction. The rotation angle and movement calculated by the analysis module 13 may be referred to as 'analyzed control information' by the analysis module 13. The analyzed control information may be provided to the conversion module 15.

The conversion module 15 may convert the analyzed control information into a data format that may be received by the robot (hardware 90) of each manufacturer, and provide the converted control information to the corresponding robot. The corresponding robot may rotate the robot arm according to the data input from the conversion module 15, and the end effector installed at an end of the robot arm may move by 10 cm in the y-axis direction due to the corresponding rotation.

According to the above-described analysis module 13 and conversion module 15, the manufacturer of the functional module does not need to know in which direction and by what angle to rotate the robot arm in order to move the end effector by 10 cm in the y-axis direction. However, it is sufficient for each vendor to manufacture the control module for generating final control information, for example, information to move the end effector by 10 cm in the y-axis direction, the framework module related thereto, and the screen module.

According to the management apparatus 100, functional modules having various functions may be provided. A functional module that may be freely mounted on and deleted from the management unit 120 and the control unit 110 may be referred to as a changeable module.

For example, a functional module or a changeable module that may access a virtual world 80 such as a metaverse and use various services provided by the virtual world 80 may be provided.

A meta module g2 that corresponds to a functional module that may access the virtual world 80 and use various services provided by the virtual world 80 may be mounted in the management unit 120 or the control unit 110.

The meta module may be used to access the provision apparatus 400 configured to provide the virtual world 80, for example, a provision server, and use robot-related functions provided from the provision server.

The control unit 110 may be provided with a first communication module 11 configured to communicate with at least one of the provision server, the management unit 120, and the market server 190.

The management unit 120 may be provided with a second communication module 21 configured to communicate with at least one of the provision server, the control unit 110, and the market server 190.

The provision apparatus 400 may provide the virtual world 80. The customer may access the virtual world 80 through the management unit 120 equipped with the meta module, or access the virtual world 80 through a terminal 40 such as a personal computer or a smart phone.

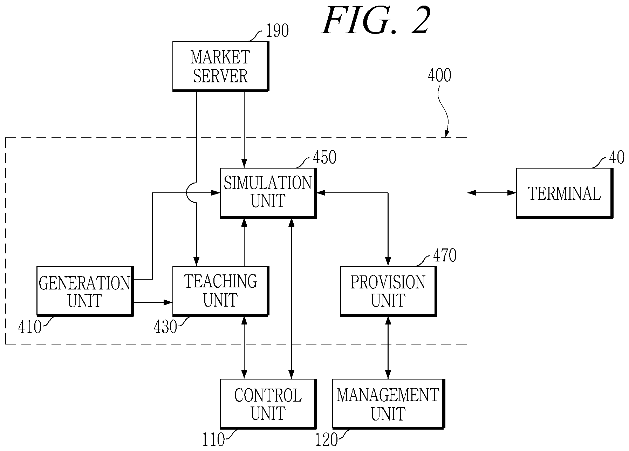

FIG. 2 is a schematic view showing a provision apparatus 400 according to the present disclosure.

The provision apparatus 400 shown in FIG. 2 may include a generation unit 410, a provision unit 470, a simulation unit 450, and a teaching unit 430.

The generation unit 410 may generate the virtual world 80, for example, a metaverse, and generate a virtual robot matching the actual robot in the virtual world 80.

The movement of the virtual robot generated in the virtual world 80 is not reflected to the actual world at all. Accordingly, even when any error occurs in the virtual robot, the actual robot may not be affected. Accordingly, the customer may test the operation, process, performance of the functional module, function, and the like of the robot freely using the virtual robot in the virtual world 80. In addition, the customer may freely use peripherals of the robot, which is difficult to purchase in the actual world, in the virtual world 80.

The provision apparatus 400 according to the present disclosure may propose an environment in which the test results using the virtual robot in the virtual world 80 may be applied to the actual robot as it is. In addition, the provision apparatus 400 may propose an environment in which the virtual robot operating in the same manner as the actual robot as much as possible is implemented in the virtual world 80.

The provision unit 470 may apply a process or functional module alternately between the virtual robot and the actual robot.

As an example, the provision unit 470 may provide a first functional module developed for the actual robot to the virtual robot. Alternatively, the provision unit 470 may provide a second functional module developed for the virtual robot to the actual robot.

The first functional module may be developed through an actual integrated development environment (IDE) 89 for the actual robot.

The second functional module may be developed through a virtual integrated development environment (IDE) 81 for the virtual robot.

The generation unit 410 may generate a virtual vendor that has entered the virtual world 80. The virtual vendor may include vendors that have registered the functional module in the market server 190. Alternatively, the virtual vendor may include vendors registered in the virtual world 80 among vendors that manufacture and sell the peripherals of the robot.

The simulation unit 450 may simulate virtual peripherals provided by the virtual vendors, or simulate the operation of the virtual robot equipped with the functional module.

The operation of the virtual robot disposed in the virtual world 80 may not be interlocked with the actual robot. In other words, the operation of the virtual robot may be independent of the actual robot. For example, even when the virtual robot performs an operation 'a', the actual robot may maintain a stopped state or perform an operation 'b'. However, it is preferable that the operation 'a' of the virtual robot is the same as or similar to the operation 'a' performed by the actual robot as much as possible. Accordingly, the test performed on the virtual robot may be the same as the test performed on the actual robot.

The operations of the virtual robot and the virtual peripherals disposed in the virtual world 80 may follow the operations of the actual robot and the actual peripherals by the simulation unit 450. To this end, the simulation unit 450 may simulate the operation of the actual robot equipped with the functional module in the virtual world 80. In order to simulate the operation of the actual robot, the simulation unit 450 may operate the virtual robot through the control of the control unit 110 of the actual robot that matches the virtual robot.

The virtual robot may be graphically generated by using the specifications of the actual robot as it is. The virtual robot generated by using the specifications of the actual robot may graphically include the robot arm, joints, and the like of the actual robot. The remaining problem may be determining operation information, such as how much to extend the robot arm and how much to rotate the joint in which direction. At this time, the simulation unit 450 may receive and use the operation information from the control unit 110 of the actual robot as it is, instead of calculating the operation information by itself.

Accordingly, there is an advantage in that the operation of the virtual robot may be the same as that of the actual robot. In other words, this may mean that the tests on the virtual robot may be applied to the actual robot as it is.

In addition, a load of the simulation unit 450 required to generate the operation information can be reduced. The simulation unit 450 may be provided in the provision apparatus 400, and a lot of load may be required to generate the operation information for a plurality of customers that have accessed the provision apparatus 400. However, according to this embodiment, it is possible to distribute the computational load of the simulation unit 450 to the control unit 110 of the actual robot.

When the control unit 110 of the actual robot of another customer is used for the virtual robot of a specific customer, various problems may occur. When the customer purchases a specific actual robot in order to suppress the occurrence of various problems, the generation unit 410 may generate a specific virtual robot that matches the specific actual robot in the virtual world 80. In other words, this may mean that the actual robots corresponding to the virtual robots existing in the virtual world 80 exist in the actual world as many as the number of virtual robots.

At this time, the simulation unit 450 may simulate the process of the specific virtual robot at the request of the customer.

The simulation unit 450 may communicate with the control unit 110 of the specific actual robot purchased by the customer when simulating the process. The simulation unit 450 may simulate the process of the virtual robot according to the control information received from the control unit 110. Of course, to this end, the simulation unit 450 may provide process-related information to the control unit 110 in advance.

The corresponding process may be performed by the functional module provided from the market server 190 or provided from the virtual vendors that have entered the virtual world 80.

When the process simulated by the simulation unit 450 is requested to be mounted on the specific actual robot, the provision unit 470 may provide the functional module used for simulation of the simulation unit 450 to the specific actual robot as it is. At this time, the functional module used for the simulation may include at least one of the above-described first functional module and second functional module.

The generation unit 410 may generate the virtual vendors that have entered the virtual world 80 according to a registration request of an actual vendor that wants to enter the virtual world 80. A list of the corresponding virtual vendors and a list of items to be sold may be provided to customers who have accessed the virtual world 80.

The customer may visit the virtual vendors to purchase and use necessary peripherals and functional modules. The customer may want to actually purchase some of the necessary items among the items.

In order to reduce the inconvenience of the user performing a procedure such as re-searching for actual peripherals corresponding to the virtual peripherals purchased in the virtual world 80 and requesting an order, the provision unit 470 may provide order information of the peripherals or functional modules purchased from the virtual world 80 to the actual vendors.

The teaching unit 430 may teach the virtual robot using the teaching module mounted on the virtual robot. Teaching is one of the traditional learning methods of the robot. For example, the customer may set a movement path by gripping the robot arm with his/her hand and moving the robot arm around. The robot or the control unit 110 may learn and set a path along which the robot arm is dragged by the user's hand as an automatic movement path. In the subsequent automatic operation, the robot may move along the corresponding automatic movement path. While the teaching method using the actual robot has high accuracy, there is a problem in that it is difficult to try various methods.

According to the teaching unit 430, various teaching operations may be performed by using the virtual robot disposed in the virtual world 80.

The teaching unit 430 may transmit the teaching result to the control unit 110 of the actual robot. The teaching result transmitted to the control unit 110 may be set as the movement path of the actual robot. In other words, the teaching result of the teaching unit 430 may be applied to the actual robot corresponding to the virtual robot through the control unit 110 as it is.

The teaching unit 430 may move the virtual robot with the help of the control unit 110 in the teaching process of the virtual robot. With the help of the control unit 110, for example, by using the operation information received from the control unit 110 similarly to the simulation unit 450, the movement path of the virtual robot may be the same as that of the actual robot. It is apparent that the teaching result using the virtual robot that moves in the same manner as the actual robot will not cause any problems even when it is applied to the actual robot.

Meanwhile, the generation unit 410 may prevent a duplication of the functional module using a non-fungible token (NFT) library.

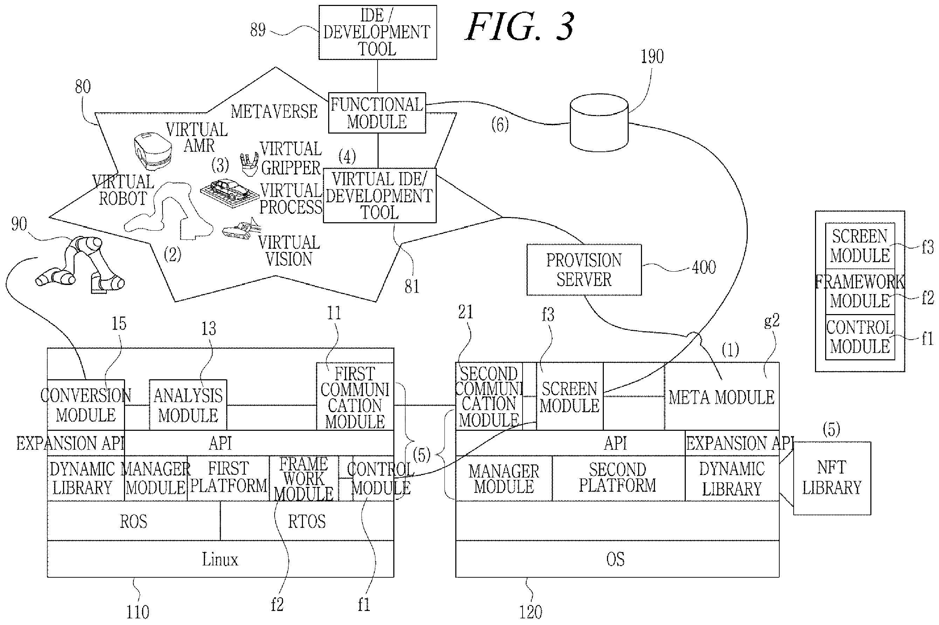

FIG. 3 is a schematic view showing the operation of the provision apparatus 400 viewed from the viewpoint of a customer who uses the provision apparatus 400 according to the present disclosure.

The customer may access the virtual world 80 corresponding to the metaverse through the management unit 120 or a separate terminal 40 equipped with the meta module (1).

When the actual robot is purchased, the same type of the virtual robot may be registered in the virtual world 80 (2).

The customer may purchase and set virtual peripherals or set the robot process in the virtual world 80 through the meta module of the management unit 120. The customer may request the virtual vendors that have entered the metaverse to purchase or teach the peripherals. A request for the virtual vendor may be interlocked to the actual vendor (3).

The content taught in the virtual world 80 based on a three-dimensional physical engine may be controlled and calculated through the control library of the control unit 110 of the actual world, and used for the actual robot (4). When the virtual peripherals is purchased in the virtual world 80, an environment in which the same type of the actual peripheral is purchased may also be provided to the actual world (5).

The customer may download the NFT library and generate the NFT using the NFT library, and generate the process and functional modules to upload them to the provision server. The customer may obtain copyright protection of the process and the function using the NFT, and take a profit structure. The NFTs for the functional modules and process modules developed in the metaverse or actually developed through the IDE 89 may be generated and registered in the market server 190 (6).

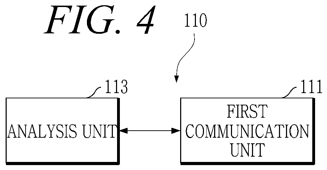

FIG. 4 is a block diagram showing a control unit of an actual robot.

The control unit 110 in FIG. 4 may include a first communication unit 111 and an analysis unit 113.

The first communication unit 111 may receive virtual control information for the virtual robot generated in the virtual world.

The virtual control information may be generated by the above-described simulation unit 450 or teaching unit 430.

The first communication unit 111 may communicate with the provision server through the management unit, or directly communicate with the provision server. To this end, the first communication unit 111 may include a first communication module 11 having a communication function.

The analysis unit 113 may calculate analysis information including at least one of a rotation angle and a rotation direction of a robot arm of an actual robot required to move according to the virtual control information. At this time, the analysis information may correspond to the above-described 'analyzed control information'. In order to output the analysis information, the analysis unit 113 may include an analysis module 13 having an analysis function.

The analysis information output from the analysis unit 113 may include effective control information even for the actual robot.

When the analysis information is output from the analysis unit 113, the first communication unit may provide the analysis information to the virtual robot. Specifically, the first communication unit may transmit the analysis information to the simulation unit 450 or the teaching unit 430 provided in the provision server. The corresponding analysis information may be transmitted to the virtual robot through the simulation unit 450 or the teaching unit 430, or used to move (including teaching) the virtual robot.

The control unit 110 shown in FIG. 4 may be referred to as a 'provision apparatus' because it provides the analysis information to the provision server or the virtual robot.

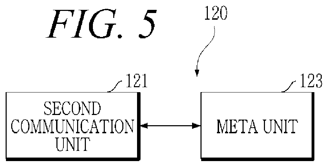

FIG. 5 is a block diagram showing a management unit of the actual robot.

The management unit 120 in FIG. 5 may include a second communication unit 121 and a meta unit 123.

The second communication unit 121 may communicate with the provision server configured to generate the virtual world. To this end, the second communication unit 121 may include a second communication module 21.

The meta unit 123 may access the provision server through the second communication unit 121. The meta unit 123 may include a meta module g2 configured to access the provision server, trade with the virtual vendor entering the virtual world, or handle the virtual control information for the virtual robot.

Using the meta module g2, the meta unit 123 may provide a menu for purchasing the virtual peripheral of the virtual robot in the virtual world. Alternatively, the meta unit 123 may provide a menu for setting a process of the virtual robot. The purchase menu or process setting menu of the virtual peripheral may be displayed through a display unit such as a display provided in the management unit.

When receiving the user (customer) operation information for the purchase menu, the meta unit 123 may generate and provide a purchase history of the virtual peripheral to an actual peripheral vendor. Accordingly, the actual peripheral may be delivered from the actual peripheral vendor.

Alternatively, the meta unit 123 may provide the actual robot with the virtual robot process based on the user (customer) operation information for the process setting menu.

The meta unit 123 may provide the first functional module developed for the actual robot to the virtual robot. Alternatively, the meta unit 123 may provide the second functional module developed for the virtual robot to the actual robot. In this case, the meta unit 123 may exchange the first functional module or the second functional module with the provision unit 470 of the provision server.

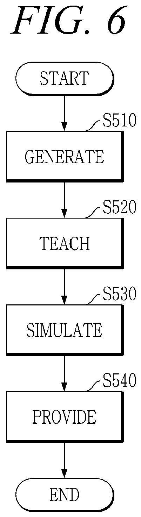

The management unit 120 shown in FIG. 5 may also be referred to as 'provision apparatus' because it provides various menus to the user, provides the purchase history of the virtual peripheral to the actual vendor, or provides the process of the virtual robot to the actual robot. FIG. 6 is a flowchart showing a provision method according to the present disclosure.

The provision method in FIG. 6 may be performed by the provision apparatus 400 shown in FIG. 2.

The provision method may include a generating operation (S510), a teaching operation (S520), a simulation operation (S530), and a providing operation (S540).

In the generating operation (S510), the virtual world 80 may be generated, and the virtual robot that matches the actual robot may be generated in the virtual world 80. The generating operation (S510) may be performed by the generation unit 410.

In the teaching operation (S520), the virtual robot may be taught by using the teaching module mounted on the virtual robot. The teaching operation (S520) may be performed by the teaching unit 430.

In the simulation operation (S530), the operation of the taught virtual robot may be simulated or the operation of the virtual robot based on the functional module may be simulated. The simulation operation (S530) may be performed by the simulation unit 450.

The providing operation (S540) may provide the teaching result or the simulated result to the actual robot. The providing operation (S540) may be performed by the provision unit 470.

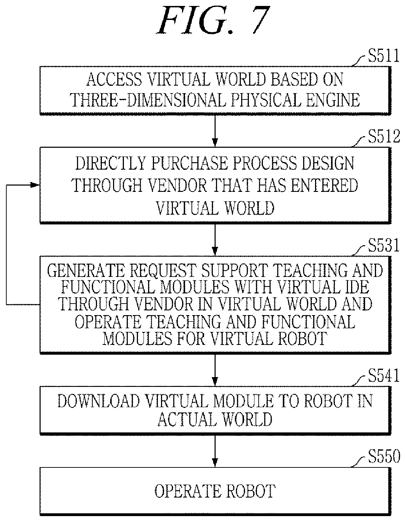

FIG. 7 is a flowchart showing a provision method viewed from the viewpoint of the customer.

The customer may access the virtual world 80 based on the three-dimensional physical engine (S511). Since the virtual world 80 is in a state of being formed by the generation unit 410, the customer may access the virtual server using the management unit 120 or the terminal 40 equipped with the meta module g2, and enter the virtual world 80 provided from the virtual server through the authentication of identification information (e.g., ID and password input completed).

The customer may design various processes of the robot in the virtual world 80, or purchase and apply necessary functional module and process module through the virtual vendor directly to the robot (S512).

As necessary, the customer may request the process module and teaching support through the virtual vendor. In addition, the customer may generate the teaching and functional modules with the virtual IDE 81 and operate the teaching and functional modules for the virtual robot (S531).

The customer may download and mount the virtual modules such as a functional module, a process module, and a teaching result generated for the virtual robot of the virtual world 80 on the actual robot (S541).

The customer may operate the actual robot equipped with the virtual module (S550).

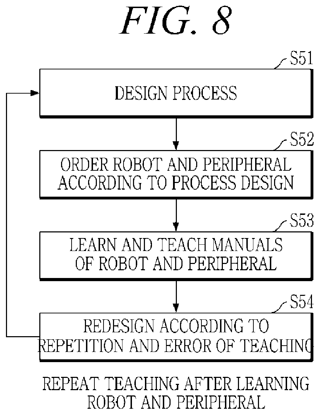

FIG. 8 is a flowchart showing a robot operation method according to a comparative example.

A comparative example may include a method of directly performing a procedure necessary for an operation for an actual robot without using a virtual robot in a virtual space.

The customer needs to first design a process to be performed using the robot (S51).

The customer needs to order the robot and the peripheral from the actual vendor according to the process design (S52).

The customer needs to learn manuals of the robot and the peripheral and perform teaching for the actual robot (S53).

The customer needs to redesign and perform the above process according to the repetition and error of teaching again (S54).

As described above, according to the comparative example, it can be seen that a waste of resource and a waste of time are extreme. On the other hand, according to the present disclosure using the virtual robot, since the teaching and the testing of the peripheral are completed in the virtual world 80, the waste of resource required for the robot operation can be prevented, and an operation input time of the actual robot can be significantly reduced.

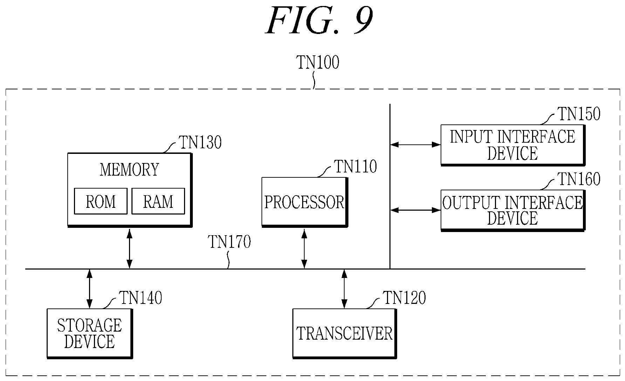

FIG. 9 is a view showing a computing apparatus according to an embodiment of the present disclosure. A computing apparatus TN100 in FIG. 9 may be an apparatus (e.g., the provision apparatus 400) described herein.

In the embodiment of FIG. 9, the computing apparatus TN100 may include at least one processor TN110, a transceiver TN120, and a memory TN130. In addition, the computing apparatus TN100 may further include a storage device TN140, an input interface device TN150, an output interface device TN160, and the like. Components included in the computing apparatus TN100 may be connected by a bus TN170 to communicate with each other.

The processor TN110 may execute a program command stored in at least one of the memory TN130 and the storage device TN140. The processor TN110 may mean a central processing unit (CPU), a graphics processing unit (GPU), or a dedicated processor on which methods according to an embodiment of the present disclosure are performed. The processor TN110 may be configured to implement procedures, functions, and methods described in connection with an embodiment of the present disclosure. The processor TN110 may control each component of the computing apparatus TN100.

Each of the memory TN130 and the storage device TN140 may store various information related to the operation of the processor TN110. Each of the memory TN130 and the storage device TN140 may be configured as at least one of a volatile storage medium and a nonvolatile storage medium. For example, the memory TN130 may be configured as at least one of a read-only memory (ROM) and a random access memory (RAM).

The transceiver TN120 may transmit or receive a wired signal or a wireless signal. The transceiver TN120 may be connected to a network to perform communication.

Meanwhile, the embodiment of the present disclosure is not implemented only through the apparatus and/or method described so far, and may also be implemented through a program for realizing the function corresponding to the configuration of the embodiment of the present disclosure or a recording medium in which the program is recorded, and the implementation may be easily achieved by those skilled in the art to which the present disclosure pertains from the description of the above-described embodiment.

Although the embodiment of the present disclosure has been described above in detail, the scope of the present disclosure is not limited thereto, and various modifications and improvements by those skilled in the art using the basic concept of the present disclosure defined by the appended claims also belong to the scope of the present disclosure.

## Claims

1. A provision apparatus comprising:
a generation unit configured to generate a virtual world, and generate a virtual robot that matches an actual robot in the virtual world; and
a provision unit configured to provide a first functional module developed for the actual robot to the virtual robot, or provide a second functional module developed for the virtual robot to the actual robot.

2. The provision apparatus of claim 1,
wherein the generation unit generates a virtual vendor that has entered the virtual world, and
a simulation unit configured to simulate a virtual peripheral provided from the virtual vendor, or simulate an operation of the virtual robot equipped with a functional module is provided.

3. The provision apparatus of claim 1,
wherein a simulation unit configured to simulate an operation of the actual robot equipped with a functional module in the virtual world is provided, and
the simulation unit operates the virtual robot through a control of a control unit of the actual robot that matches the virtual robot.

4. The provision apparatus of claim 1,
wherein when a customer purchases a specific actual robot, the generation unit generates a specific virtual robot that matches the specific actual robot in the virtual world,
a simulation unit configured to simulate a process of the specific virtual robot by the customer's request is provided,
the simulation unit communicates with a control unit of the specific actual robot when simulating the process, and
the simulation unit simulates the process of the virtual robot according to control information received from the control unit.

5. The provision apparatus of claim 4,
wherein the process is performed by the functional module provided from a market server, or provided from the virtual vendor that has entered the virtual world, and
when a process simulated by the simulation unit is requested to be mounted on the specific actual robot, the provision unit provides the functional module used for simulation of the simulation unit to the specific actual robot as it is.

6. The provision apparatus of claim 1,
wherein the generation unit generates a virtual vendor that has entered a virtual world, and
the provision unit provides order information of a peripheral or functional module purchased in the virtual world to an actual vendor.

7. The provision apparatus of claim 1,
wherein a teaching unit configured to teach the virtual robot using a teaching module mounted on the virtual robot is provided,
the teaching unit transmits a teaching result to a control unit of the actual robot, and
the teaching result of the teaching unit is applied to the actual robot corresponding to the virtual robot through the control unit as it is.

8. The provision apparatus of claim 7,
wherein the teaching unit moves the virtual robot with the help of the control unit in a teaching process of the virtual robot.

9. The provision apparatus of claim 1,
wherein the generation unit prevents a duplication of the functional module using a non-fungible token (NFT) library.

10. The provision apparatus of claim 1,
wherein a simulation unit configured to operate the virtual robot through a control unit of the actual robot is provided,
the control unit is provided with a first communication unit and an analysis unit,
the first communication unit receives virtual control information for the virtual robot,
the analysis unit calculates analysis information including at least one of a rotation angle and rotation direction of a robot arm of the actual robot necessary for moving according to the virtual control information,
the first communication unit provides the analysis information to the simulation unit, and
the simulation unit operates the virtual robot according to the analysis information.

11. The provision apparatus of claim 1,
wherein a teaching unit configured to teach the virtual robot using a teaching module mounted on the virtual robot is provided,
the teaching unit confirms operation information of the virtual robot through a control unit of the actual robot so that a movement path of the virtual robot generated in the teaching process is the same as a movement path achievable in the actual robot,
the control unit is provided with a first communication unit and an analysis unit,
the first communication unit receives a virtual movement path for the virtual robot,
the analysis unit calculates analysis information including at least one of a rotation angle and a rotation direction of a robot arm of the actual robot necessary for moving according to a virtual movement path,
the first communication unit provides the analysis information to the teaching unit, and
the teaching unit modifies the virtual movement path according to the analysis information.

12. A provision apparatus comprising:
a second communication unit configured to communicate with a provision server configured to generate a virtual world; and
a meta unit configured to access the provision server through the second communication unit,
wherein when a virtual robot that matches an actual robot is generated in the virtual world,
the meta unit provides a menu for purchasing a virtual peripheral of the virtual robot, or provides a menu for setting a process of the virtual robot in the virtual world, and
the meta unit provides a purchase history of the virtual peripheral to an actual peripheral vendor, or provides the process of the virtual robot to the actual robot.

13. A provision method performed by a provision apparatus, the method comprising:
a generation operation of generating a virtual world, and generating a virtual robot that matches an actual robot in the virtual world;
a teaching operation of teaching the virtual robot using a teaching module mounted on the virtual robot;
a simulating operation of simulating an operation of the taught virtual robot, or simulating an operation of the virtual robot based on a functional module; and
a providing operation of providing the teaching result or the simulated result to the actual robot.

14. The method of claim 13,
wherein the teaching operation transmits the teaching result performed for the virtual robot to a control unit of the actual robot, and
the teaching result of the teaching unit is applied to the actual robot through the control unit as it is.

15. The method of claim 13,
wherein the simulating operation allows a simulation unit to communicate with a control unit of the actual robot when simulating the operation of the virtual robot, and
simulates the operation of the virtual robot according to control information received from the control unit.
